# EUROPÄISCHE PATENTSCHRIFT

(11) **EP 0 466 000 B1**
(45) Veröffentlichungstag und Bekanntmachung des Hinweises auf die Patenterteilung: **18.01.1995**
(21) Anmeldenummer: 91110969.2
(22) Anmeldetag: 02.07.1991
(51) Int. Cl.: H04M 19/00, H02J 1/02, H04M 19/08

(54) **Schaltungsanordnung zur Dämpfung von dem Speisestrom für Teilnehmer-Endgeräte eines digitalen Zeitmultiplex-Fernsprechsystems überlagerten Störspannungen**
Circuit arrangement for the attenuation of interfering voltages superimposed on the feed current for the subscriber terminals of a digital time-multiplexed communication system
Circuit pour l'atténuation des tensions parasites superposées au courant d'alimentation pour terminaux téléphoniques d'un système téléphonique numérique à multiplexage temporel

(30) Priorität: 13.07.1990 DE 4022415
(43) Veröffentlichungstag der Anmeldung: 15.01.1992
(73) Patentinhaber: SIEMENS AKTIENGESELLSCHAFT, 80333 München (DE)
(72) Erfinder: Lechner, Robert, Dipl.-Ing., A-3100 St. Pölten (AT)

(56) Entgegenhaltungen:
- EP-A- 0 022 561
- US-A- 3 385 977
- PATENT ABSTRACTS OF JAPAN vol. 6, no. 136 (E-120)(1014) & JP-A-57 060 764 ( NIPPON DENKI K.K. )
- POST OFFICE ELECTRICAL ENGINEERS JOURNAL Bd. 64, Nr. 1, April 1971,Seiten 2 - 9; R. PINE: 'Telecommunications Power Supplies The Next Decade'

## Beschreibung

Die Erfindung betrifft eine Schaltungsanordnung zur Dämpfung von dem Speisestrom für Teilnehmer-Endgeräte eines digitalen Zeitmultiplex-Fernsprechsystems überlagerten Störspannungen.

Für digitale Zeitmultiplex-Fernsprechsysteme besteht die Forderung, daß die der von der Amtsbatterie gelieferten Speisespannung überlagerten Geräuschspannungen im Teilnehmer-Speisestromkreis an den Anschlüssen für die Teilnehmeranschlußleitung nur mit einer Geräuschleistung von 200 pWp an 600 Ohm auftreten dürfen. Darüber hinaus besteht die Forderung, daß über den Innenwiderstand der Amtsbatterie kein unzulässig hohes Nebensprechen auftreten darf.

Bei dem Bemühen, diese Forderungen einzuhalten, ist zu beachten, daß durch die Geräuschspannungsdämpfungsmaßnahmen die Speisereichweite nicht verringert werden darf, so daß übliche Stabilisatorschaltungen nicht in Frage kommen.

Bisher wurden zur Geräuschspannungsdämpfung verschiedene Maßnahmen ergriffen, die jedoch alle insgesamt keine befriedigende Lösung darstellen. So ist ein Nachteil von zu diesem Zwecke eingesetzten Speisedrosseln deren großes Volumen. Erfolgt die Speisung über Widerstandsspeisebrücken mit Speisebrückenkondensator, so ist bei dieser Lösung ein Speiseübertrager zur Signalankopplung erfoderlich, der jedoch ebenfalls ein zu großes Volumen aufweist. Werden elektronische Teilnehmerschnittstellenschaltungen mit interner Regelschaltung eingesetzt, dann erfordert diese Lösung einen hohen Aufwand für den Überspannungsschutz einer solchen Schaltung.

Die erwähnten dezentralen Maßnahmen reichen überdies in ihrer Wirkung nicht aus, so daß bisher zusätzlich zentrale Maßnahmen ergriffen werden, von denen die Einschaltung eines Kondensators zwischen den auf Bezugspotential liegenden bzw. Speisespannungspotential führenden Anschlüssen der Speisestromquelle und niederohmige LC-Filter für die Batteriespannung zu nennen sind, die jedoch ebenfalls wegen ihres großen Volumens nachteilig sind.

Die Aufgabe der Erfindung besteht daher darin, eine Schaltungsanordnung zur Dämpfung von dem Speisestrom für Teilnehmerendgeräte überlagerten Störspannungen anzugeben, die die Nachteile der bisher zu diesem Zwecke angewandten Schaltmaßnahmen nicht aufweist.

Erfindungsgemäß wird diese Aufgabe durch die im Kennzeichen des Patentanspruchs 1 angegebenen Merkmale gelöst.

Durch die Erfindung ist damit eine Lösung geschaffen, die, ohne daß Abstriche am Ausmaß der Dämpfung gemacht werden müssen, mit ein geringes Volumen aufweisenden Bauteilen auskommt.

Gemäß einer weiteren Ausgestaltung der Erfindung, durch die eine symmetrische Einkopplung der vom erfindungsgemäß eingesetzten Regler gelieferten Komnpensationsspannung möglich ist, wird die durch Längsströme mögliche Reglerbelastung verringert, so daß dieser dementsprechend leistungsärmer dimensioniert werden kann.

Noch eine andere Ausgestaltung der Erfindung führt zu einer noch weiter zentralisierten Lösung der Störspannungskompensation.

Nachstehend wird die Erfindung anhand von Ausführungsbeispielen unter Bezugnahme auf die Zeichnung näher erläutert.

In der Zeichnung zeigen:
- FIG 1: ein erstes Ausführungsbeispiel der Erfindung,
- FIG 2: ein zweites Ausführungsbeispiel der Erfindung.

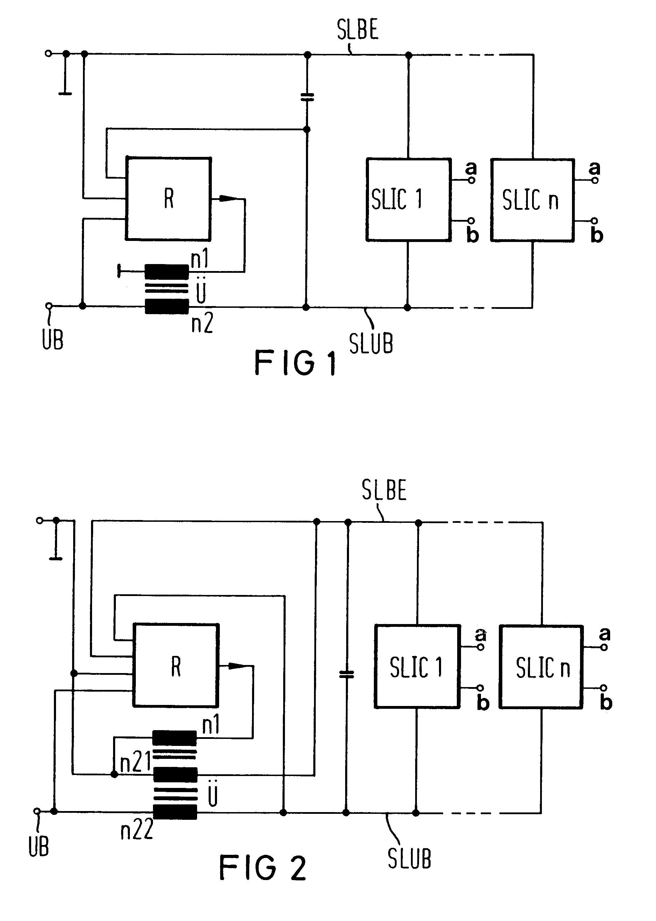

In der Figur 1 sind in Blockdarstellung Teilnehmerleitungsschnittstellen SLIC1 bis SLICn dargestellt, an deren Anschlüsse a, b die Adern jeweils einer Teilnehmeranschlußleitung angeschlossen zu denken sind, über die eine Verbindung mit einem Teilnehmerendgerät besteht. Eine solche Schnittstellenschaltung übernimmt außer der Realisierung der eigentlichen Schnittstelle zur Teilnehmeranschlußleitung die Speisung der Teilnehmerleitung bzw. des daran angeschlossenen Endgeräts sowie die Indikation der verschiedenen vermittlungstechnischen Betriebszustände der Teilnehmeranschlußleitung. Jeweils zusammen mit einer Funktionseinheit, die dem Testzugriff dient, einer Funktionseinheit, durch die der Überspannungsschutz realisiert wird und einer Funktionseinheit, durch die eine Codierung/Decodierung der Spachsignale, die Einstellung des Sprachkegels, die Einstellung der 2-Drahtimpedanz und die 2-Draht/4-Draht-Umsetzung bewirkt wird, und die hier nicht dargestellt sind, bildet sie einen Teilnehmersatz.

Jeweils 8 bis 16 solcher Teilnehmersätze bilden in ebenfalls nicht dargestellter Weise zusammen mit einem Baugruppenprozessor und mit einem gruppenindividuellen Schnittstellenbaustein einen Anschlußmodul, der über Zeitmultiplexleitungen mit dem Koppelfeld der Vermittlungsstelle, der dieser Anschlußmodul angehört, verbunden ist.

Die erwähnten Teilnehmerleitungsschnittstellen SLIC1 bis SLICn sind an die Adern SLBE und SLUB einer Verbindungsleitung mit einer zentralen Speisestromquelle verbunden, deren einer Pol im angenommenen Fall auf Bezugspotential liegt und die eine Speisespannung UB liefert.

Erfindungsgemäß ist zur Kompensation der Störspannungen, die dem von der Speisebatterie gelieferten Speisestrom durch Einstreuungen überlagert sind, ein Regler R vorgesehen.

Der Regler R ist mit zwei Eingängen an die erwähnten Adern der zur Speisebatterie führenden Verbindungsleitung SLBE/SLUB verbunden. Es wird ihm demnach als zu regelnde Größe die von Störspannungen überlagerte, von der Speisestromquelle gelieferte Speisespannung zugeführt.

Ein Ausgang des Reglers ist an die einseitig an Bezugspotential liegenden Primärwicklung n1 eines Übertragers Ü angeschlossen, dessen Sekundärwicklung n2 in der Ader SLUB der genannten Verbindungsleitung zur Speisestromquelle liegt. Es besteht außerdem eine Verbindung zwischen dem Teil der Ader SLUB, der von der Speisespannung abgewendeten Seite der Wicklung n2 ausgeht, und einem weiteren Eingang des Reglers. Zwischen dieser Anschlußstelle bzw. dem genannten Reglereingang und der Ader SLBE der Verbindungsleitung, also der an Bezugspotential liegenden Verbindungsleitung ist ein Kondensator C angeschlossen.

Durch den Regler wird eine der Störspannung entsprechende Kompensationsspannung erzeugt, die über den erwähnten Übertrager Ü auf die Ader SLUB eingekoppelt wird, die vom Summenspeisestrom für die Teilnehmerleitungsschnittstellenschaltungen bzw. die an sie angeschlossenen Endgeräte durchflossen wird. Der Übertrager Ü weist ein großes Übersetzungsverhältnis auf, wobei die in der Ader SLUB liegende Sekundärwicklung n2 die kleinere Windungszahl aufweist. Wenn beispielsweise die der Speisespannung überlagerte Störspannung UR eine Amplitude von 0,3 V aufweist und der Regler eine Spannung von 6 V abgibt, dann beträgt das Übersetzungsverhältnis n1:n2 = 20:1, womit eine Impedanztransformation von 400:1 vorliegt. Durch diese Impedanztransformation wird auch Ri so klein, daß über die Speisespannung kein störendes Nebensprechen auftritt. Wenn weiter angenommen wird, daß der Strombedarf für die n angeschlossenen Teilnehmerleitungsschnittstellenschaltungen SLIC bis SLICn im Höchstfall 0,8 A beträgt, dann erfordert der erwähnte Übertrager Ü einen geringeren Eisenbedarf für seinen Kern als ein üblicher Speisegabelübertrager.

Der sogenannte äquivalente Lastwiderstand, der die erforderliche Reglerleistung bestimmt, liegt im praktischen Fall zwischen 50 und 125 Ohm, womit die erforderliche Ausgangsleistung des Reglers bei der angenommenen Störspannung UR von 0,3 V zwischen 1,8 und 0,72 m Watt liegt. Dies bedeutet, daß der Regler mit Hilfe eines Operationsverstärkers einer niedrigen Leistungsklasse realisiert sein kann. Bei der erfindungsgemäßen Schaltungsanordnung ist nicht ausgeschlossen, daß die Teilnehmerschnittstellenschaltungen SLIC1 bis SLICn ihrerseits Schaltmittel enthalten, die zur Störspannungsdämpfung beitragen, jedoch in ihrer Wirkung nicht ausreichen, womit sie allerdings auch nicht das oben angesprochene störende große Volumen aufweisen.

Das Ausführungsbeispiel gemäß Figur 2 unterscheidet sich von demjenigen gemäß Figur 1 durch die Art der ausgangsseitigen Ankopplung des Reglers R an die mit der Speisestromquelle verbindende Verbindungsleitung SLUB/SLBE.

Der Übertrager Ü weist in diesem Falle zwei Sekundärwicklungen n21 und n22 auf, von denen die eine, n21, in die Ader SLBE der Verbindungsleitung und die andere, n22, in die Ader SLUB der Verbindungsleitung eingefügt ist. Durch diese symmetrische Ankopplung wird eine übermäßige Erwärmung des Übertragers Ü durch aufgrund von Einstreuungen entstehenden Längsströmen in den Adern SLUBE und SLUB vermieden.

Für Anwendungen der erfindungsgemäßen Schaltungsanordnung in Ländern, in denen geringere Anforderungen an den Pegel von Reststörspannungen bestehen, dagegen aber eine niedrigere Grenze für Rauschspannungen gefordert wird, kommt eine Version der erfindungsgemäßen Schaltungsanordnung in Frage, bei der der Regler R in nichtdargestellter Weise mehreren jeweils in einem Anschlußmodul zusammengefaßten Gruppen von Teilnehmerleitungsschnittstellen zugeordnet ist.

## Patentansprüche

1. Schaltungsanordnung zur Dämpfung von dem Speisestrom für Teilnehmer-Endgeräte eines digitalen Zeitmultiplex-Fernsprechsystem überlagerten Störspannungen,
**gekennzeichnet durch**
eine Regelschaltung (R), die einer Mehrzahl von unter anderem der Zufuhr des Speisestroms an das jeweils über eine Teilnehmeranschlußleitung angeschlossene Endgerät dienenden Teilnehmerleitungsschnittstellen (SLIC1 bis SLICn) zugeordnet ist, der die auf einer Verbindungsleitung (SLBE, SLUB) zu einer zentralen Speisestromquelle (Erde, UB) auftretende störbehaftete Speisespannung als zu regelnde Größe zugeführt wird, und die als Stellgröße eine der Störspannung entsprechende Kompensationsspannung liefert, die über einen Übertrager (Ü) mit großem Übersetzungsverhältnis, dessen die niedrige Windungszahl aufweisende Sekundärwicklung (n2) von der Summe der Speiseströme für die an die Mehrzahl der Teilnehmerleitungsschnittstellen (SLIC1 bis SLICn) angeschlossenen Endgeräte durchflossen wird, der störbehafteten Speisespannung zur Erzeugung einer störgedämpften Speisespannung überlagert wird.

2. Schaltungsanordnung nach Anspruch 1,
**dadurch gekennzeichnet**,
daß der Übertrager (Ü) zwei Sekundärwicklungen (n21, n22) aufweist, von denen die eine (n21) in die an Bezugspotential (Erde) liegende Ader (SLBE) und die andere (n22) in die an Speisepotential (UB) liegende Ader (SLUB) der mit der gemeinsamen Speisestromquelle verbindenden Verbindungsleitung eingefügt ist.

3. Schaltungsanordnung nach Anspruch 1 oder 2,
**dadurch gekennzeichnet**,
daß der Regler mehreren jeweils in einem Anschlußmodul zusammengefaßten Gruppen von Teilnehmerleitungsschnittstellen zugeordnet ist.

## Claims

1. A circuit arrangement for attenuating noise voltages superimposed on the power-feeding current for subscriber terminals of a digital time-division multiplex telephone system, characterized by a control circuit (R) which is allocated to a plurality of subscriber line interfaces (SLIC1 to SLICn) used for, among other things, supplying the power-feeding current to the terminal in each case connected via a subscriber line, which control circuit is supplied with the noisy power-feeding voltage as variable to be controlled, which occurs on a connecting line (SLBE, SLUB) to a central power-feeding source (earth, UB), and which supplies as correcting value a compensation voltage corresponding to the noise voltage, which compensation voltage is superimposed on the noisy power-feeding voltage via a transformer (Ü) having a high transformation ratio, for the secondary winding (n2) of which, which exhibits the low number of turns, the sum of the power-feeding currents for the terminals connected to the plurality of subscriber line interfaces (SLIC1 to SLICn) flows, for generating a power-feeding voltage with attenuated noise.

2. Circuit arrangement according to Claim 1, characterized in that the transformer (Ü) exhibits two secondary windings (n21, n22), one (n21) of which is inserted into the wire (SLBE) connected to reference potential (earth) and the other one (n22) of which is inserted into the wire (SLUB) connected to the power-feeding potential (UB) of the connecting line connecting to the common power-feeding source.

3. Circuit arrangement according to Claim 1 or 2, characterized in that the controller is allocated to a number of groups of subscriber line interfaces in each case combined in one access module.

## Revendications

1. Montage destiné à atténuer des tensions parasites superposées au courant d'alimentation de terminaux d'abonnés d'un système téléphonique numérique à multiplexage temporel,
caractérisé par
un circuit (R) de régulation, qui est associé à une pluralité d'interfaces (SLIC1 à SLICn) de ligne d'abonné servant entre autres à fournir le courant d'alimentation au terminal connecté par une ligne de raccordement d'abonné, auquel est fournie en tant que grandeur de conduite la tension d'alimentation parasitée apparaissant sur une ligne (SLBE, SLUB) de connexion à une source (Terre, UB) centrale de courant d'alimentation et qui fournit comme grandeur de commande une tension de compensation, qui correspond à la tension parasite et qui est superposée à la tension d'alimentation parasitée en vue de produire une tension d'alimentation, dont les parasites sont atténués, par l'intermédiaire d'un transformateur (Ü) qui a un rapport de transformation grand et dont l'enroulement (n2) secondaire de nombre de spires petit est traversé par la somme des courants d'alimentation destinés aux terminaux connectés à la pluralité d'interfaces (SLIC1 à SLICn) de ligne d'abonné.

2. Montage suivant la revendication 1,
caractérisé en ce que
le transformateur (Ü) comporte deux enroulements (n21, n22) secondaires, dont l'un (n21) est inséré dans la branche (SLBE) conductrice portée au potentiel de référence (Terre) et dont l'autre (n22) est inséré dans la branche (SLUB) conductrice portée au potentiel (UB) d'alimentation, de la ligne de connexion reliant à la source commune de courant d'alimentation.

3. Montage suivant la revendication 1 ou 2,
caractérisé en ce que
le circuit de régulation est associé à plusieurs groupes, rassemblés dans un module de connexion, d'interfaces de ligne d'abonné.
